## Europäisches Patentamt
## European Patent Office
## Office européen des brevets

(19)

(11) Publication number: **0 039 993**
**B1**

(12) **EUROPEAN PATENT SPECIFICATION**

(45) Date of publication of patent specification: **19.12.84**

(51) Int. Cl.³: **F 02 P 5/04**

(21) Application number: **81301426.3**

(22) Date of filing: **02.04.81**

(54) Internal combustion engines having knock control.

(30) Priority: **14.05.80 US 149645**

(43) Date of publication of application:
**18.11.81 Bulletin 81/46**

(45) Publication of the grant of the patent:
**19.12.84 Bulletin 84/51**

(84) Designated Contracting States:
**DE FR GB IT**

(56) References cited:
**EP-A-0 039 992**
**DE-A-2 917 412**
**FR-A-2 398 895**
**GB-A-2 024 317**
**US-A-4 106 447**
**US-A-4 111 035**

**P. HOROWITZ - "The art of electronics" - 1980 -**
**CAMBRIDGE UNIVERSITY PRESS 1980,**
**Cambridge, pp.153-156**
**US-EPA, EPA 460/3-78-009, September 1978,**
**91 Ron Increased Compression Ratio Engine**
**Demonstration, pp. 60, 61, 66-74, 26, 27, 80, 81**

(73) Proprietor: **GENERAL MOTORS CORPORATION**
**General Motors Building 3044 West Grand**
**Boulevard**
**Detroit Michigan 48202 (US)**

(72) Inventor: **Brandt, Herman Fritz**
**7457 St. Auburn**
**Birmingham Michigan 48010 (US)**

(74) Representative: **Breakwell, John Neil Bower**
**et al**
**GM Patent Section Luton Office (F6) P.O. Box**
**No. 3 Kimpton Road**
**Luton Beds. LU2 OSY (GB)**

Courier Press, Leamington Spa, England.

EP 0 039 993 B1

## Description

This invention relates to a spark-ignited internal combustion engine as specified in the preamble of claim 1, for example as disclosed in FR—A—2,398,895.

The invention is particularly concerned with such engines wherein the knock control means includes a sensor responsive to engine knock vibrations and effective to generate an electrical signal therefrom which can be used to detect engine knock above a trace level. In such a system, closed loop control means may be provided for the engine in response to the signal to control engine knock to the trace level.

It is an observed characteristic of engine knock that it generates bursts of ringing vibrations in the engine, the vibrations being characterised by at least one frequency which is characteristic of the particular engine and has a peak-to-peak amplitude which increases rapidly and then decreases more slowly over a period usually lasting from about two or three to ten milliseconds. These vibrations may generally be sensed by an accelerometer or vibration sensor in contact with an engine component.

However, there is a great deal of additional noise and other vibrations produced in a typical multi-cylinder, reciprocating-piston internal combustion engine, which vibrations form background noise from which knock vibrations must be distinguished. The problem of distinguishing knock vibrations is further compounded by the fact that many of the other vibrations have a peak-to-peak amplitude comparable with that of audible knock, and include significant energy at the same frequency as is characteristic of the knock vibrations.

In the said FR—A—2,398,895, the low pass filtering is described as suppressing envelopes of less than several AC cycles duration, so that envelopes of greater than about 0.5 millisecond will be passed, whether they be knock or noise.

Most prior production knock sensing and control systems relying solely on amplitude or frequency discrimination have not proved particularly successful in controlling knock to trace levels in a vehicle-mounted engine under driving conditions, although a carefully designed combination of the two methods, as shown in US—A—4,111,035 and US—A—4,106,447, has shown substantial commercial success, in that a knock control system similar to that shown in the said United States patent has been used for several years in vehicles having turbocharged engines, and for a shorter period in vehicles having naturally aspirated engines, with an increased compression ratio for improved power and fuel economy with unleaded gasoline.

A different approach disclosed in DE—A—2,917,412 is to utilize pressure sensors located in the individual combustion chambers of the engine, to provide an indication of variations in combustion chamber pressure itself, with a high pass filter being used to separate the high frequency knock variations, and the envelope of the resulting signal being derived and applied directly to a comparison circuit. However, although such a system will tend to be relatively insensitive to externally originating noise and vibration, the complication and expense involved in the use of a multiplicity of pressure sensors render such a system less favourable for application to motor vehicles in volume production.

Despite the prior proposals, there is still potential for improvement in a knock control system for internal combustion engines. Controlling knock to trace levels in closed loop is difficult to accomplish, and even the systems in conformity with the said United States patents may, with some engines and under extreme operating conditions, occasionally allow brief bursts of excessive knock, or respond to noises other than knock and produce a condition known as false retard, the name of which condition is derived from the means by which knock is reduced, namely retarding the spark advance. In addition, the systems use a high Q bandpass filter which must be matched to the characteristic frequency of the particular engine on which the system is used. Although with the proper sensor and design of the sensor mounting boss such a system can generally handle sample to sample variations of a particular engine design, it would be helpful in minimizing the number of separate electronic chips to cover a wide variety of engine designs having different characteristic knock frequencies if the narrow selectivity of the band-pass filter could be widened with no reduction in system performance.

In addition, although the system of the said FR—A—2,398,895 does not include high Q filtering, the system does apparently allow noise envelopes having a duration of 0.5 to 5.0 milliseconds to the mistaken for knock.

According to the present invention, therefore, a spark-ignited internal combustion engine according to the present invention, having knock control means of the general kind disclosed in the said FR—A—2,398,895, is characterised by the features specified in the characterising portion of claim 1.

In such an engine the knock control system has the potential to provide improved ability to control engine knock to trace levels while maintaining good power, fuel economy and drivability.

This knock control system also has the potential to reliably differentiate between engine knock and other vibrations of similar amplitude and characteristic frequency. The system can readily include electronic signal processing circuitry capable of application to engines having different characteristic knock frequencies.

In a preferred form of engine in accordance with the invention having knock control provision as aforesaid, the signal from the knock sensor is supplied to a bandpass amplifier having a low Q or in other words a wide pass band. Such an amplifier is capable of rejecting the very high and very low frequency noise, but accepts as signal content a range of frequencies sufficiently wide to include the charactersitic knock frequencies of any engine anticipated. The output of this wide pass band amplifier is then supplied to a detector which eliminates the knock frequency but leaves the envelope of the signal. The knock signal is thus treated as a modulated carrier wave, and suppression of the carrier frequency takes place in this stage. The output of the detector is then provided to a multipole low pass filter having a half power frequency within the range of 100 to 200 Hertz and preferably within the range substantially between 131 and 160 Hertz. This filter differentiates between knock pulses and most other noise pulses of comparable amplitude and characteristic frequency, suppressing the latter in favor of the former. The filter is preferably of the four pole variety in the best mode, although a smaller number of poles may provide control at a lower performance level. The output of the filter is applied to further signal processing circuitry and engine control apparatus to maintain engine knock at trace levels or below. The knock control provision permits the use of engine turbocharges or higher compression ratios and/or advanced spark timing for greater power and fuel economy.

In the drawings:—

Figure 1 is a schematic and block diagram of an internal combustion engine according to this invention having a knock control system;

Figure 2 is a block diagram of circuitry in accordance with this invention suitable for use as a knock measuring circuit in Figure 1;

Figure 3 is a circuit diagram of a preferred embodiment of the circuitry shown in block diagram form in Figure 2;

Figure 4 is a series of time waveforms useful in illustrating the operation of the apparatus shown in Figures 1 to 3;

Figure 5a shows a time plot of the envelope of a typical knock pulse;

Figure 5b shows the impulse response of a matched filter which is optimized for the wave shape shown in Figure 5a; and

Figures 6a and 6b are plots of amplitude and phase respectively for a typical multipole low pass filter suitable for use in conformity with this invention and a matched filter having the impulse response shown in Figure 5b.

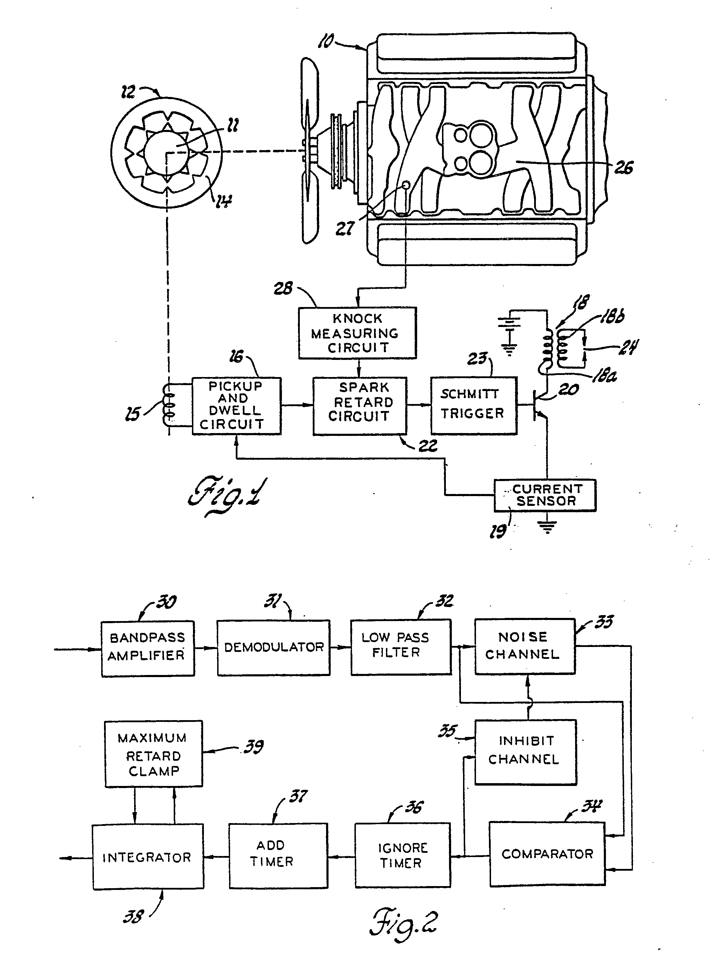

In Figure 1 of the drawings, there is shown an internal combustion engine 10 having a rotary crank-shaft which drives the rotor 11 of an alternating current signal generator 12. Generator 12 is a standard spark timing signal generator of the variable reluctance type disclosed and described in U.S. patent No. 3,254,247 to Folgy, which issued May 31, 1966. Generator 12 also includes a stator 14 and a pickup coil 15, and provides a plurality of equally spaced projections around rotor 11 and stator 14 related to the number of cylinders in engine 10. Relative rotation between rotor 11 and stator 14 at a speed proportional to engine speed produces a pulsating variation in reluctance which induces an alternating voltage signal in coil 15.

The alternating voltage signal in coil 15 is applied to pickup and dwell circuitry 16, which generates normal spark timing pulses. These normal spark timing pulses could be applied to a Schmitt trigger 23 to control a switching transistor 20 connected to switch current on and off in the primary 18a of spark coil 18. The flow of current in primary 18a causes electromagnetic energy to build up in spark coil 18; and when transistor 20 cuts off current in primary 18a this energy is released in the form of a high voltage spark pulse in coil secondary 18b applied to spark plug 24. A current sensor 19 provides feedback to pickup and dwell circuitry 16 to control the dwell time of current conduction in primary 18a. The system so far described is one well known in the art and shown in the U.S. patent to Richards et al No. 3,828,672, issued October 1, 1974.

In order to selectively retard the spark timing in response to an engine knock signal, spark retard circuitry 22 is inserted between pickup and dwell circuitry 16 and Schmitt trigger 23. Apparatus suitable for use as such circutiry is shown in the aforementioned West patent US—A—4,106,447. However, other appropriate spark retard circuits are well known.

Engine 10 is provided with a vibration or detonation sensor 27, which may be mounted on an intake manifold 26 as shown but may also be mounted on the block or another component of engine 10. The precise location of sensor 10 is determined by experiment for a particular engine so that it is sensitive to knock from all cylinders of the engine. Sensor 27 includes a threaded stud which is tightened into a threaded depression within a mounting boss formed at the desired location. Vibration sensor 27 thus vibrates physically with the engine or engine component upon which it is mounted and responds to such vibrations in at least its axial direction and possibly in other modes to generate electrical output voltage corresponding to such vibrations. Sensor 27 may be of the type which includes a permanent magnet to generate magnetic flux, an electric pickup coil and a magnetostrictive element within the coil in the path of the magnetic flux to vary the flux with vibration and thus generate the output voltage across the coil. An example of such a vibration sensor is shown in the U.S. patent No. 4,161,665, issued to Charles E. Buck et al on July 17, 1979. Alternatively, sensor 27 could be of the piezoelectric variety in which a piezoelectric element is attached to a portion of the sensor case for flexing therewith and thus generates an electrical output voltage as the sensor is vibrated.

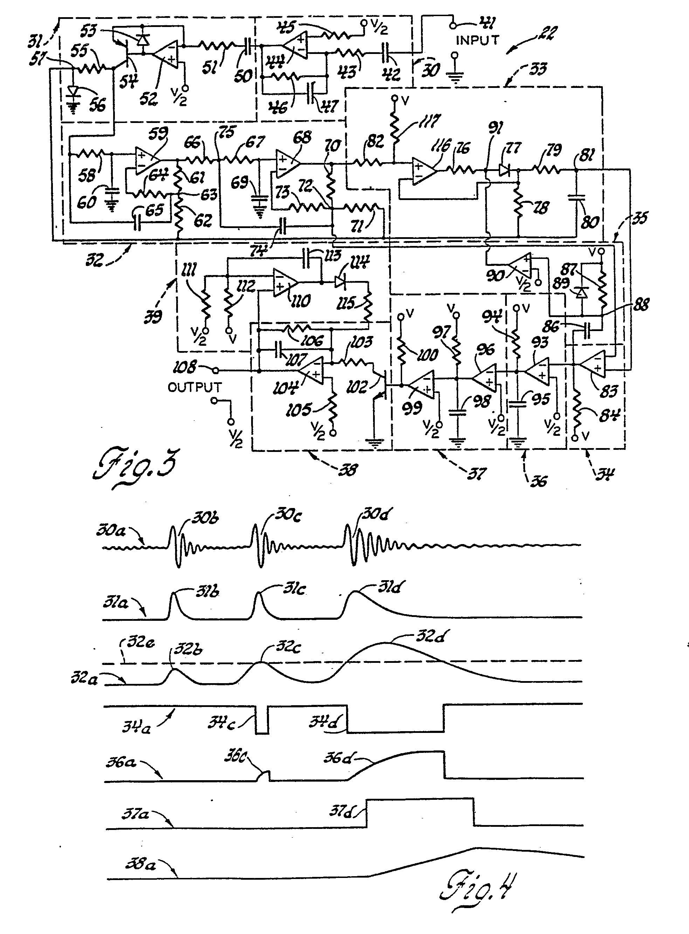

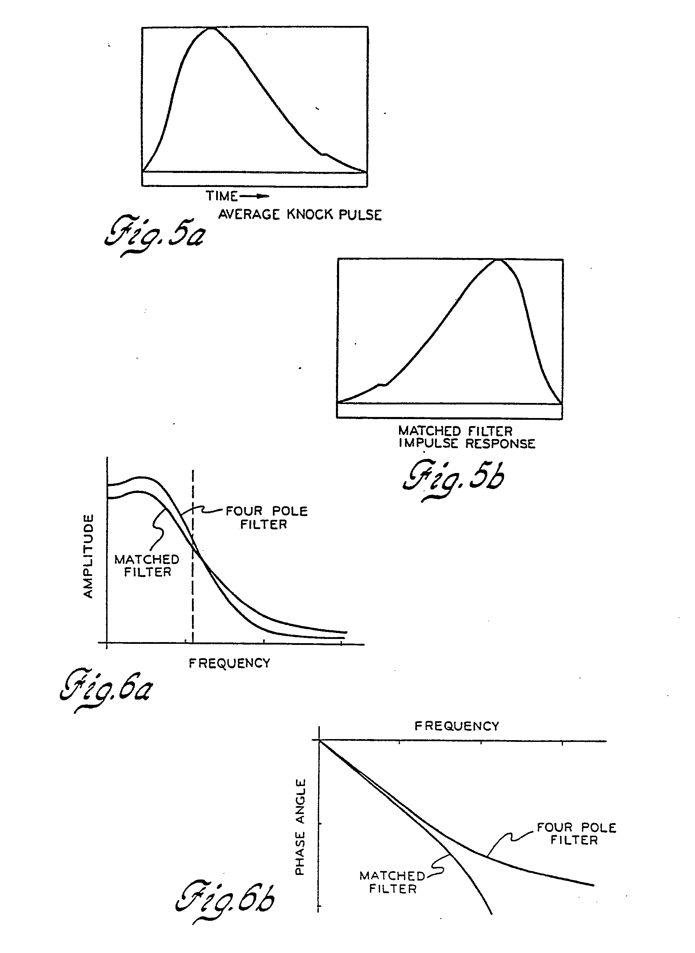

The output signal from vibration sensor 27 is provided to knock measuring circuitry 28 in which a knock intensity signal is generated for application to spark retard circuit 22 to control the retard of the spark timing from the normal spark timing. Apparatus for use as knock measuring circuit 28 is shown in block diagram form in Figure 2 and in circuit form in Figure 3.

Figure 2 shows a block diagram of knock measuring circuit 28. The input signal from the sensor 27 is supplied to a bandpass amplifier 30. Amplifier 30 has two main functions in the system. The first is to provide the correct degree of amplification to the signal so that the signal is of sufficient strength to be usable but is not so strong as to surpass the limits of the power supply voltage and clip. Of course, the degree of amplification required depends to a great degree on the type of sensor used and the specific location and mounting of the sensor on engine 10; in this embodiment it is 14.2 dB. It is desirable, if possible, to provide a standard gain in amplifier 30, use the same sensor for all applications of the system and adjust the gain for a particular engine application by the sensor placement and mounting.

The second object of the bandpass amplifier 30 is to provide a very mild bandpass filter effect that will cut out undesirable noise at very low and high frequencies but will pass a wide band of frequencies in the audio range so that the circuit is not particularly sensitive to changes in characteristic knock frequency from engine to engine. A typical bandpass characteristic for amplifier 30 provides a Q of 0.5 about a center frequency of 6.2 kilohertz. It should be mentioned at this point, however, that the particular sensor with which this knock control system has demonstrated superior knock control ability provides a significant degree of bandpass filtering in its own output. The sensor itself provides, through its interactive resonance with the engine 10, a useful bandpass of approximately a thousand Hertz with good suppression of frequencies outside the bandpass. Thus, the main effect of the bandpass characteristic of amplifier 30 may be to filter out noise due to external electronic sources rather than noise due to the mechanical vibrations of engine 10. If such frequency selectivity were not provided by sensor 27, it might be desirable in some cases to provide a narrower bandpass in amplifier 30 than that previously described. However, the bandpass of amplifier 30 should not become too narrow, or the number of separate electronic packages for different engines may proliferate. Overall, the requirements of present claim 1 represent the controlling factor.

A representation of the output of bandpass amplifier 30 is shown as waveform 30a in Figure 4. This waveform shows three ringing pulses of six kilohertz carrier frequency numbered 30b, 30c and 30d, the latter of which is a knock induced pulse while the former two are noise pulses of shorter duration. It appears to be the case that many of the high energy pulses that are not knock produced but tend to cause false retard exhibit a different shape in the time domain from that of a typical knock induced pulse. The duration of thse noise pulses is generally significantly shorter than that of the knock pulse while their amplitude may be the same or even greater and their carrier frequency is the same charactersitic frequency produced by knock events.

The output of bandpass amplifier 30 is provided to a demodulator 31 which extracts the envelopes of the pulses from the six to seven kilohertz carrier wave. A typical output of demodulator 31 is shown in waveform 31a of Figure 4 and includes envelopes 31b, 31c and 31d corresponding to like-numbered pulses in waveform 30a.

The signal from demodulator 31 is provided to a low pass filter 32. This filter, in its broadest aspect, comprises a low pass filter having a half power frequency in the range of approximately 100 to 200 Hertz. In the preferred embodiment shown here, the filter 32 is a four pole low pass filter having a half power frequency of substantially 160 Hertz. The system has been tested with filters of one and four poles and half power frequencies of 100, 131, 160 and 200 Hertz. The best performance has been obtained with four poles and 131—160 Hertz. Analysis appears to indicate acceptable but decreasing performance as the number of poles is decreased from four. A system with a one pole filter at 160 Hz has shown performance which may be acceptable in some applications. Systems having filters with the two frequency extremes of 100 to 200 Hertz showed some degradation in performance with respect to those at 131 to 160 Hertz, although they still were able to control knock to some lesser degree of success. At half power frequencies of 100 Hertz and lower, the knock pulses appear to become so attenuated and drawn out in time that knock becomes difficult to detect; at half power frequencies of 200 Hertz and higher, the system becomes more prone to false retard. Between the 131 and 160 Hertz filters, some vehicles have shown slightly better performance with the former; some have shown slightly better performance with the latter; and some have shown no difference. Either might be considered as a preferred half power frequency; or the two might be considered to approximately define a range of optimum performance, as distinct from the wider range of acceptable performance corresponding to the two frequency extremes of 100 to 200 Hertz.

If a large number of demodulated knock pulses show a similar shape and duration and the noise in which the pulses appear is assumed to be white noise, then the matched filter technique may be applied to a typical or averaged knock pulse to determine the optimal time domain filter characteristic to maximize the signal to noise ratio for that typical or average pulse. In the case of knock, a substantially large proportion of knock pulses have shapes such as that shown in Figure 5a. The amplitude varies, of course, with the severity of knock, as does the duration; however, most pulses due to audible knock have durations of approximately three to ten milliseconds. Not all the pulses associated with knock have this classic shape; however, a sufficiently large percentage of such pulses, particularly of the most severe knock, match this shape as to give the application of the technique some validity. In addition, the noise is not true white noise, so that the filter characteristic obtained might not actually be optimum, however, it may nevertheless prove to be a useful filter.

The application of matched filter theory to the pulse waveform shown in Figure 5a yields a filter impulse response which is the time reversed image of the pulse, as shown in Figure 5b. This characteristic can be designed in a tapped analog delay line and such a filter has been used in place of the low pass filter shown in the embodiment herein with very good results. In fact, the matched filter was the first filter used in the development of this invention. However, the tapped analog delay line is a comparatively expensive device available only in comparatively small quantities in the commercial market.

A four pole low pass filter with a half power frequency of 131 Hertz, however, shows great similarity to the matched filter described by Figure 5b in a plot of amplitude versus frequency as shown in Figure 6a. In addition, the filters match in a plot of phase shift versus frequency at least through the portion of the frequency spectrum where the amplitude output of the filters is substantial. The divergence of the filters in phase shift occurs only at frequencies higher than the half power frequency, so that it has little effect on the actual filter performance. It is interesting to note that the divergence in phase shift occurs at lower frequencies as the number of poles in the filter is reduced. This appears consistent with the finding of reduced performance as the number of poles is reduced.

The output signal of low pass filter 32 is shown in a sample waveform 32a in Figure 4. Pulses 32b, 32c and 32d, which correspond to similarly numbered pulses in waveforms 30a and 31a, are each somewhat elongated in duration by low pass filter 32. However, pulse 32d, which corresponds with the actual knock pulse, is now significantly greater in amplitude than either of pulses 32b and 32c. This can be seen with reference to a constant amplitude line 32e.

The output signal from low pass filter 32 is supplied to a noise channel 33, which generates a unidirectional voltage noise reference signal that generally follows the average voltage of the output of low pass filter 32. The relative output levels of filter 32 and noise channel 33 are adjusted by suitable amplifier and voltage divider means so that the noise reference signal is maintained at a level below the peaks of the knock induced pulses in the output of low pass filter 32 but greater than most of the rest of said signal. The ideal output of noise channel 33 would be a signal such as that shown in line 32e of Figure 4; although as explained in the aforementioned West et al patent US—A—4,111,035, that ideal can only be approximated. The outputs of low pass filter 32 and noise channel 33 are compared in a comparator 34, the output of which assumes one level whenever a pulse in the output signal of low pass filter 32 exceeds the noise reference voltage and assumes another level when it does not. The output of comparator 34 is shown as waveform 34a of Figure 4, assuming that the noise channel output voltage is as shown in line 32e. Although there is no output pulse from comparator 34 corresponding to pulse 32b, there is a short pulse 34c corresponding to pulse 32c and a much longer pulse 34d corresponding to 32d.

The output of comparator 34 is fed back through an inhibit channel 35 to noise channel 33. Inhibit channel 35 is similar in purpose and operation to the low pass filter described in the aforementioned West et al patent US—A—4,111,035. Its effect is to compensate for the high content of knock signal in the noise channel 33 and thus prevent the output of noise channel 33 from going too high in response to strong knock pulses with consequent reduction in knock control capability.

The output of comparator 34 is further provided to an ignore timer 36 which converts the leading edge of each output pulse from comparator 34 to a rising exponential voltage, as seen in waveform 36a of Figure 4 with pulses 36c and 36d. This produces the result in the following circuitry to be described below, of suppressing all pulses from comparator 34 of less than two milliseconds duration, which pulses are mostly due to short duration noise vibrations as described earlier, and shortening each knock pulse by the same two milliseconds.

The output of ignore timer 36 is provided to an add timer 37 which completes the previously described suppression of pulses and delay of leading edges and delays the end of each pulse by a constant time duration such as three milliseconds. Add timer 37 thus provides a desired ratio between short and long pulses for best control of both light and heavy knock. In adding three milliseconds to each pulse, add timer does not merely make up for the shortening effect of ignore timer 36, but provides an overall adjustment for the relative control of light and heavy knock which is available to the circuit designer. Waveform 37a of Figure 4 includes extended pulse 37d. The ignore and add timers may be provided with longer times, such as 7 and 8 milliseconds, respectively.

The output of add timer 37 is provided to an integrator 38, the output of which is seen in waveform 38a of Figure 4. Integrator 38 includes a fast charge charactersitic for a quick spark retard in response to knock but a slow discharge characteristic for a slow, controlled recovery from said retard in the absence of knock. In addition, the output of integrator 38 is limited by a maximum retard clamp 39. The output of integrator 38 is applied to spark retard circuit 22 to produce the desired spark retard.

Figure 3 shows a circuit diagram of a preferred embodiment of the system shown in block form in Figure 2. Input terminal 41 is connected through a capacitor 42 and resistor 43 to the inverting input of an operational amplifier or op amp 44, the noninverting input of which is connected through a resistor 45 to an electric power source at voltage V/2. The output of op amp 44 is connected in feedback through a parallel resistor 46 and capacitor 47 to the inverting input. These elements comprise bandpass amplifier 30.

The output of op amp 44 is connected through a series capacitor 50 and resistor 51 to the inverting input of an op amp 52, the non-inverting input of which is connected to the electrical power supply at voltage V/2. The output of op amp 52 is connected in feedback to the inverting input through a diode 53 and is further connected to the base of a PNP bipolar transistor 54 having its emitter connected to the inverting input of op amp 52. Diode 53 is oriented with its anode connected to the output of op amp 52. The collector of transistor 54 is connected through a resistor 55 and a diode 56 to ground, the diode 56 being oriented with its cathode connected to ground. These elements comprise demodulator 31.

The collector of transistor 54 is further connected through a resistor 58 to the non-inverting input of an op amp 59, which input is also connected to ground through a capacitor 60. The output of op amp 59 is connected through series resistors 61 and 62 to junction 57 between resistor 55 and diode 56. Junction 63 between resistors 61 and 62 is connected through a resistor 64 to the inverting input of op amp 59 and also through a capacitor 65 to the collector of transistor 54.

The output of op amp 59 is further connected through a series pair of resistors 66 and 67 to the non-inverting input of an op amp 68, which input is further connected to ground through a capacitor 69. The output of op amp 68 is connected through a series pair of resistors 70 and 71 to junction 57; and the junction 72 between resistors 70 and 71 is connected through a resistor 73 to the inverting input of op amps 68 and through a capacitor 74 to the junction 75 of resistors 66 and 67. Elements 58—75 described above comprise the multipole low pass filter 32, the specific form of filter in this embodiment being a pair of cascaded two pole filters having identical poles. The filters of this pair will be seen to comprise so-called Butterworth filters, characterised by a maximally flat response in the passband. The output of the respective filters, as well as the outputs of demodulator 31 and noise channel 33, are referenced to junction 57 at one diode drop above ground so that op amps 59, 68 and 116 will produce a "zero" output for a "zero" input. The filter constructed around op amp 59 takes its feedback from junction 63 so that a voltage gain is provided through the seires pair of resistors 61 and 62 to make up for attenuation losses in the filter. The filter constructed around op amp 68 provides a voltage gain similarly through series resistors 70 and 71.

The output of op amp 68 is provided through a resistor 82 to the noninverting input of the op amp 116, which input is further connected through a resistor 117 to a voltage source at voltage V. The output of op amp 116 is connected through a resistor 76 and diode 77 to the inverting input. The inverting input of op amp 116 is connected to the cathode of diode 77 and further through a resistor 78 to junction 57. The inverting input of op amp 116 is further connected through a series resistor 79 and capacitor 80 to junction 57. These elements comprise the noise channel 33, with op amp 116 and diode 77 providing a detecting function and resistor 79 and capacitor 80 comprising a low pass filter with an output from their junction 81.

Junction 81 is connected to the noninverting input of a comparator 83, the output of which is tied through a resistor 84 to the electric power source at voltage V. The inverting input of comparator 83 is connected to junction 72, so that resistors 70 and 71 control the amplitude of the noise reference level, corresponding to line 32e in Figure 4, relative to the amplitude of the knock pulses in the signal from filter 32. Comparator 83 and resistor 84 comprise the comparator 34.

The output of comparator 83 is connected through a capacitor 86 and resistor 87 in series to the electrical power source at voltage V, with junction 88 between capacitor 86 and resistor 87 being connected to the anode of a diode 89 having its cathode connected to the power source at voltage V. Junction 88 is further connected to the non-inverting input of a comparator 90 having an inverting input connected to the electrical power source at voltage V/2 and an output connected to a junction 91 between resistor 76 and diode 77. Elements 86 through 90 comprise the inhibit channel.

In operation, an input knock signal applied to terminal 41 is amplified and filtered with a broad bandpass characteristic in bandpass amplifier 30, detected in detector 31 and filtered in filter 32. The time average of the output of filter 32 is obtained in noise channel 33 and applied to the noninverting input of comparator 83. The output of filter 32 obtained from junction 72, reduced in amplitude from that obtained at the output of op amp 68 by the voltage divider resistors 70 and 71, is provided to the inverting input of comparator 83. Thus, in the absence of a large pulse such as 32c or 32d in Figure 4, the output of comparator 83 is high and the output of comparator 90 does not affect junction 91 of noise channel 33. When a pulse in the signal from junction 72 exceeds the noise reference output of channel 33, however, the output of comparator 83 falls to a low level. Capacitor 86 causes the noninverting input and output of comparator 90 to fall with the output of comparator 83, which reverse biases diode 77 to prevent the noise channel voltage from being greatly increased by the same pulse coming through the knock channel 33. Capacitor 86 begins to charge immediately, however, so that the output of comparator 90 rises to once again forward bias diode 77. Diode 89 provides a quick discharge path for capacitor 86 when the output of comparator 83 switches high again.

The output of comparator 83 is connected to the inverting input of a comparator 93, the non-inverting input of which is connected to the electric power source at voltage V/2. The output of comparator 93 is connected through a resistor 94 to the power source at voltage V, through a capacitor 95 to ground and directly to the inverting input of a comparator 96, the non-inverting input of which is connected to the power source at voltage V/2. Elements 93—95 comprise ignore timer 36.

The output of comparator 96 is connected through a resistor 97 to the power source at voltage V, through a capacitor 98 to ground and directly to the inverting input of a comparator 99. Comparator 99 has a noninverting input connected to the power source at voltage V/2 and an output connected through a resistor 100 to the power source at voltage V. Elements 96—100 comprise the add timer 37.

In operation, a downward swing of the voltage output of comparator 83, which indicates the beginning of a knock pulse, causes the output of comparator 93 to attempt to swing high. However, there is a time delay caused by the charging of capacitor 95 before this voltage, which is applied to the inverting input of comparator 96, can swing up above voltage V/2. When it does, the output of comparator 96 swings low immediately and causes the output of comparator 99 to swing high. Thus, a delay is introduced by ignore timer 36 to the leading edge of a knock pulse.

When the output of comparator 83 swings high again, the output of comparator 93 immediately swings low and the output of comparator 96 attempts to swing high. In this case, however, a time delay is introduced by the necessity of capacitor 98 to charge; and this delays the following swing of the output of comparator 99 low. Thus a time delay is introduced by add timer 37 at the end of a knock pulse.

The output of comparator 99 is connected to the base of bipolar NPN transistor 102 having a grounded emitter and a collector connected through a resistor 103 to the inverting input of an op amp 104. Op amp 104 has a non-inverting input connected through a resistor 105 to the electric power source at voltage V/2 and an output connected through a parallel resistor 106 and capacitor 107 back to the inverting input. These elements comprise the integrator 38, with a fast charging path for capacitor 107 during a knock pulse through transistor 102 and resistor 103 and a slower discharge path for capacitor 107 during the absence of a knock pulse through resistor 106. The output of op amp 104 comprises an output terminal 108 for knock measuring circuit 28 with the knock voltage measured in the positive direction relative to V/2.

The output of op amp 104 is further connected to the noninverting input of an op amp 110, which has an inverting input connected through a resistor 111 to electric power source at voltage V/2 and through a resistor 112 to the electric power source at voltage V. The output of op amp 110 is connected back to the inverting input through a capacitor 113 and through a series diode 114 and resistor 115 to the inverting input of op amp 104, the diode oriented with its anode connected to the output of op amp 110. These items comprise the maximum retard clamp 39. In operation, when the output voltage of op amp 104, which is also the knock retard voltage, reaches the reference voltage on the inverting input of op amp 110, op amp 110 turns on and supplies current to the inverting input of op amp 104 through diode 114 and resistor 115. This current passes through transistor 102 and decreases the current drawn from capacitor 107 so that the output of op amp 104 does not increase further. With this method of clamping there is no overcharging of capacitor 107; and the output of op amp 104 is able to begin falling immediately at the end of a knock pulse. A list of parts and component values for use in the embodiment described above follows:

Capacitors
42—390$\mu\mu$F
47—33$\mu\mu$F
50—0.1$\mu$F
60, 65, 69, 74—0.068$\mu$F
80—2.7$\mu$F
86,98—0.022$\mu$F
95—0.01$\mu$F
107—4.7$\mu$F
113—22$\mu\mu$F

Transistors
54—2N3906
102—2N4401

Resistors
43—75K
45, 46—680K
51—3.65K, 1%
55, 58, 66, 67—14.7K, 1%
61—750
62—1.24K, 1%
64, 73—30K
76, 84, 100—10K
78—68K
79—51K
87—750K
111—20K, 1%
112—29.4K
115—470
117—475K, 1%

Op Amps
44, 52—LM1458
59, 68, 116—LM2904
104, 110—LM2902

Comparators
83, 90, 93, 96—LM2901

Diodes
all 1N485B

In addition, certain resistors may vary in value as the circuit is calibrated for a particular engine. Resistors 70, 71 and 82 determine the noise channel gain relative to the signal strength for application to the input of the comparator 34; resistor 94 determines the time delay of the ignore timer; and resistor 97 determines the time delay of the add timer. Finally, resistors 103 and 106 determine the relative charge and discharge rates of the integrator 38, while resistor 105 should be the same as resistor 106. Sample values for a Buick turbocharged V-6 3.8 L engine are: resistor 70—787, 1%, resistor 71—1.21K, 1%; resistor 82—4.53K, 1%, resistor 94—432K, 1%; resistor 97—232K, 1%, resistor 103—17K, 5%; resistors 105, 106—750K, 5%.

In EP—A—0 039 992 there is described and claimed a vehicle mounted, spark ignited internal combustion engine of the type which occasionally exhibits bursts of knock induced engine vibrations, the knock induced vibration burst being of varying intensity and having durations varying directly with said intensity, the engine having means to sense the knock induced vibration bursts and generate pulses having durations varying directly with the durations of the bursts, and spark timing control means effective to retard spark timing from a predetermined timing not based on knock in response to said pulses and to advance said spark timing back towards said predetermined timing in the absence of said pulses, said engine being characterised by means effective to lengthen selected pulses from said sensing and generating means by a common predetermined time duration before applying them to the spark timing control means, whereby the proportional difference in duration between the longer pulses indicating more intense knock and the shorter pulses indicating less intense knock is decreased and a minimum pulse width is ensured for more effective control of knock of varying intensity.

## Claims

1. A spark-ignited internal combustion engine (10) of the type in which knock-induced and other engine vibrations occur in bursts of at least one characterstic audio frequency, including means (27) effective to sense said knock-induced and other vibration bursts and generate an electrical signal therefrom, means (30) effective to amplify said electrical signal with a wide passband around the characteristic audio frequence, means (31) effective to demodulate said signal to obtain the envelopes of said vibration bursts, low pass filter means (32) effective to filter the envelopes of the knock-induced and other vibration bursts, comparator means (34) effective to compare said filtered envelopes of the knock-induced and other vibration bursts with a reference and generate a knock signal when the amplitude of said envelopes exceeds the reference, and means (36, 37, 38, 22) responsive to said comparing means to control an engine variable in response to a knock signal to prevent undesirable levels of knock, characterised in that said low pass filter means is a low pass filter (32) which has a half power frequency within the range 100 to 200 Hertz and is thereby effective to discriminate between the envelopes of knock bursts matching a predetermined exemplary envelope shape and the envelopes of other vibration bursts, whereby the filter reduces the amplitudes of the envelopes of the other bursts in comparison with those of the knock-induced bursts for an improved signal-to-noise ratio in knock detection with respect to noise at the characterstic audio frequency.

2. A spark-ignited internal combustion engine according to claim 1, characterised in that said low pass filter (32) comprises a multipole low pass filter.

3. A spark-ignited internal combustion engine according to claim 2, characterised in that said low pass filter (32) comprises a four pole low pass filter.

4. A spark-ignited internal combustion engine according to any one of claims 1 to 3, characterised in that said low pass filter has a half power frequency substantially within the range 131 to 160 Hertz.

## Patentansprüche

1. Funkengezündete Brennkraftmaschine (10) des Typs, bei welchem durch Klopfen hervorgerufene und andere Maschinen-Vibrationen in Stößen mit mindestens einer charakteristischen Audiofrequenz auftreten, mit Mitteln (27), die zum Erfassen der durch Klopfen hervorgerufenen und anderer Vibrationsstöße erzeugen, Mitteln (30), die zum Verstärken des elektrischen Signals mit einer großen Bandbreite um die charakteristische Audiofrequenz wirksam sind, Mitteln (31), die zur Demodulierung des Signals wirksam sind, um die Hüllkurven der Vibrationsstöße zu erhalten, Tiefpaßfiltermitteln (32), die zum Filtern der Hüllkurven der durch Klopfen hervorgerufenen und anderen Vibrationsstöße wirksam sind, Komparatormitteln (34), die zum Vergleichen der gefilterten Hüllkurven der durch Klopfen hervorgerufenen und anderen Vibrationsstößen mit einer Referenz wirksam sind und ein Klopfsignal erzeugen, wenn die Amplitude der Hüllkurven die Referenz übersteigt und mit Mitteln (36, 37, 38, 22), die an Abhängigkeit von den Komparatormitteln eine Maschinenvariable auf ein Klopfsignal hin steuern, um unerwünschte Klopfpegel zu verhüten, dadurch gekennzeichnet, daß das Tiefpaßfiltermittel ein Tiefpaßfilter (32) ist, welches innerhalb des Bereiches von 100 bis 200 Hz Frequenzen mit halbem Leistungsdurchlaß besitzt und dadurch wirksam ist, zwischen den Hüllkurven von Klopfstößen zu unterscheiden, die einer vorbestimmten Beispiels-Hüllkurvengestalt entsprechen, und den Hüllkurven anderer Vibrationsstöße, wodurch das Filter die Amplituden der Hüllkurven der anderen Stöße im Vergleich zu denen der durch Klopfen hervorgerufenen Stöße für ein verbessertes Signal/Rauschverhältnis bei der Iopf-Erfassung mit Bezug auf Rauschen an der charakteristischen Audiofrequenz reduziert.

2. Funkengezündete Brennkraftmachine nach Anspruch 1, dadurch gekennzeichnet, daß das Tiefpaßfilter (32) ein Mehrpol-Tiefpaßfilter umfaßt.

3. Funkengezündete Brennkraftmachine nach Anspruch 2, dadurch gekennzeichnet, daß das Tiefpaßfilter (32) ein Vierpol-Tiefpaßfilter umfaßt.

4. Funkengezündete Brennkraftmachine nach einem der Ansprüche 1· bis 3, dadurch gekennzeichnet, daß das Tiefpaßfilter Frequenzen mit dem Durchlaß der halben Leistung im wesentlichen innerhalb des Bereichs 131 bis 160 Hz besitzt.

**Revendications**

1. Un moteur à combustion interne (10) à allumage par étincelle, du type dans lequel des vibrations dues au cliquetis et d'autres vibrations du moteur se produisent en rafales d'au moins une audiofréquence caractéristique, comprenant: des moyens (27) capables de détecter lesdites rafales de vibrations de cliquetis et autres vibrations et d'engendrer un signal électrique correspondant; des moyens (30) capable d'amplifier ledit signal électrique avec une large bande passante autour de l'audiofréquence caractéristique; des moyens (31) capables de démoduler ledit signal pour obtenir les enveloppes desdites rafales de vibrations; des moyens de filtrage passebas (32) capables de filtrer les enveloppes des rafales de vibrations de cliquetis et d'autres vibrations; des moyens de comparaison (34) capables de comparer lesdites enveloppes filtrées avec une référence, et d'engendrer un signal de cliquetis quand l'amplitude desdites enveloppes excède la référence; des moyens (36, 37, 38, 22) correspondant auxdits moyens de comparaison pour commander une variable du moteur en reponse à un signal de cliquetis, pour éviter des niveaux indésirables de cliquetis, caractérisé en ce que ledit moyen de filtrate passebas est un filtre passe-bas (32) qui a une fréquence de demipuissance à l'intérieur d'une bande de 100 à 200 Hertz et est de ce fait capable de discriminer entre les enveloppes de rafales de cliquetis épousant une forme d'enveloppe type prédéterminée et les enveloppes d'autres rafales de vibrations, ce filtre réduisant les amplitudes des enveloppes des autres rafales par rapport à celles de cliquetis pour un meilleur rapport Signal/Bruit dans la détection du cliquetis par rapport au bruit à l'audiofréquence caractéistique.

2. Un moteur à combustion interne à allumage par par étincelle selon la revendication 1, caractérisé en ce que ledit filtre passe-bas (32) comprend un filtre passe-bas multipolaire.

3. Un moteur à combustion interne à allumage par étincelle selon la revendication 2, caractérisé en ce que ledit filtre passe-bas comprend un filtre passa-bas quadripolaire.

4. Un moteur à combustion interne à allumage par étincelle selon l'une des revendications 1 à 3, caractérisé en ce que ledit filtre passa-bas a une fréquence de demipuissance principalement dans la bande de 131 à 160 Hertz.

*Fig.1*

*Fig.2*

Fig. 3

Fig. 4

2

TIME——►

AVERAGE KNOCK PULSE

*Fig. 5a*

MATCHED FILTER
IMPULSE RESPONSE

*Fig. 5b*

FOUR POLE
FILTER

MATCHED
FILTER

AMPLITUDE

FREQUENCY

*Fig. 6a*

FREQUENCY

PHASE ANGLE

FOUR POLE
FILTER

MATCHED
FILTER

*Fig. 6b*

3